# EUROPEAN PATENT APPLICATION

(11) **EP 1 940 155 A2**
(43) Date of publication of application: **02.07.2008**
(21) Application number: 07013775.7
(22) Date of filing: 13.07.2007
(51) Int. Cl.: H04N 5/445

(54) **Video display apparatus and method for displaying video**

(30) Priority: 27.12.2006 JP 2006352112
(71) Applicant: KABUSHIKI KAISHA TOSHIBA, Tokyo (JP)
(72) Inventor: Matsuda, Takuji c/o Intellectual Property Division, Minato-ku Tokyo (JP)
(74) Representative: HOFFMANN EITLE

(57) **Abstract**

A video display apparatus includes a controller that controls, when performing a two-picture display, other components to composite video signal output from a tuner to be input to a first color decoder via a first correction unit and to composite video signal output from an external input terminal to be input to a second color decoder via a second correction unit.

## Description

### BACKGROUND

### 1. Field

One embodiment of the invention relates to a video display apparatus and a video display method capable to perform multi-picture display and teletext display.

### 2. Description of the Related Art

Usually, TV receivers capable of teletext display split a video signal that is output from a tuner into two signals (for displaying a main picture and for acquiring teletext data), and acquire teletext data using one of the split video signals.

Video signals are classified into a type having optimum characteristics in terms of image quality and a type having characteristics that facilitate acquisition of VBI data that contain teletext data. The optimum characteristics in terms of image quality and the characteristics that facilitate acquisition of VBI data do not necessarily coincide with each other. Therefore, if the characteristics of a video signal are set with priority given to image quality, the teletext data acquisition performance is lowered, and vice versa.

A countermeasure technique is known in which a TV receiver is equipped with two tuners. For example, while a video signal that is output from a first tuner being used for image output, a video signal that is output from a second tuner is used for teletext decoding and teletext data are thereby obtained. An example of such TV receiver is disclosed in JP-A-5-244522.

In the above prior art technique, since the one tuner is dedicated to decoding of teletext data, the inherent function of displaying two pictures using two systems of vide signals is not exercised.

### SUMMARY

One of objects of the present invention is to provide a video display apparatus and a method for displaying video capable of attaining both of increase in video quality by use of a multi-picture display function and increase in teletext data decoding performance.

According to a first aspect of the present invention, there is provided a video display apparatus including: a first switch that switches a processing route for a composite video signal to perform a two-picture display or a one-picture display; a first color decoder that decodes the composite video signal to output a video signal for displaying a first picture, while extracting data other than teletext data from data included in vertical blanking intervals of the composite video signal; a second color decoder that decodes the composite video signal to output a video signal for displaying of a second picture, while extracting the teletext data from the data included in vertical blanking intervals of the composite video signal; a first correction unit that is connected between the first switch and the first color decoder and corrects the composite video signal to have characteristics prioritized for improving image quality; a second correction unit that is connected between the first switch and the second color decoder and corrects the composite video signal to have characteristics prioritized for improving image quality; a third correction unit that is connected between the first switch and the second color decoder and corrects the composite video signal to have characteristics prioritized for data acquisition; a second switch that is connected between the first switch and the second color decoder and switches between a first route for outputting the composite video signal to the second color decoder via the second correction unit and a second route for outputting the composite video signal to the second color decoder via the third correction unit; and a controller that controls the first switch and the second switch: (1) when performing the two-picture display, to output the composite video signal for displaying the first picture to the first color decoder via the first correction unit, and to output the composite video signal for displaying the second picture to the second color decoder along the first route; and (2) when performing the one-picture display, to output the composite video signal for displaying the first picture to the first color decoder via the first correction unit, and to output the composite video signal for displaying the first picture or other input composite video signal to the second color decoder along the second route.

According to a second aspect of the present invention, there is provided a video display apparatus including: a first switch that switches a processing route for a composite video signal to perform a two-picture display or a one-picture display; a first color decoder that decodes the composite video signal to output a video signal for displaying a first picture, while extracting data other than teletext data from data included in vertical blanking intervals of the composite video signal; a second color decoder that decodes the composite video signal to output a video signal for displaying of a second picture, while extracting the teletext data from the data included in vertical blanking intervals of the composite video signal; a correction unit that is connected between the first switch and the second color decoder and corrects the composite video signal to have characteristics prioritized for data acquisition; a second switch that is connected between the first switch and the second color decoder and switches between a first route for outputting the composite video signal to the second color decoder not via the correction unit and a second route for outputting the composite video signal to the second color decoder via the correction unit; and a controller that controls the first switch and the second switch: (1) when performing the two-picture display, to output the composite video signal for displaying the first picture directly to the first color decoder, and to output the composite video signal for displaying the second picture to the second color decoder along the first route; and (2) when performing the one-picture display, to output the composite video signal for displaying the first picture directly to the first color decoder, and to output the composite video signal for displaying the first picture or other input composite video signal to the second color decoder along the second route.

According to a third aspect of the present invention, there is provided a method for displaying video by a video display apparatus having: a first color decoder that decodes a composite video signal to output a video signal for displaying a first picture, while extracting data other than teletext data from data included in vertical blanking intervals of the composite video signal; a second color decoder that decodes the composite video signal to output a video signal for displaying of a second picture, while extracting the teletext data from the data included in vertical blanking intervals of the composite video signal; and a controller that switches signal routes of the composite video signal to be output to the first color decoder and the second color decoder. The method includes: when performing a two-picture display for displaying a first picture and a second picture simultaneously on one screen, outputting the composite video signal for displaying the first picture directly to the first color decoder, while outputting the composite video signal for displaying the second picture to the second color decoder along the first route; and when performing a one-picture display for displaying only the first picture, outputting the composite video signal for displaying the first picture directly to the first color decoder, and outputting the composite video signal for displaying the first picture or other input composite video signal to the second color decoder via a correction unit that corrects the composite video signal to have characteristics prioritized for data acquisition.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 shows an exemplary configuration of a video display apparatus according to a first embodiment;

Fig. 2 is an exemplary circuit diagram showing a circuit of each EQ of the video display apparatus;

Fig. 3 shows an exemplary configuration of a video display apparatus according to a second embodiment; and

Fig. 4 is an exemplary waveform diagram which compares a signal that has not passed through an EQ with a signal that has passed the EQ in the video display apparatus of Fig. 3.

### DETAILED DESCRIPTION

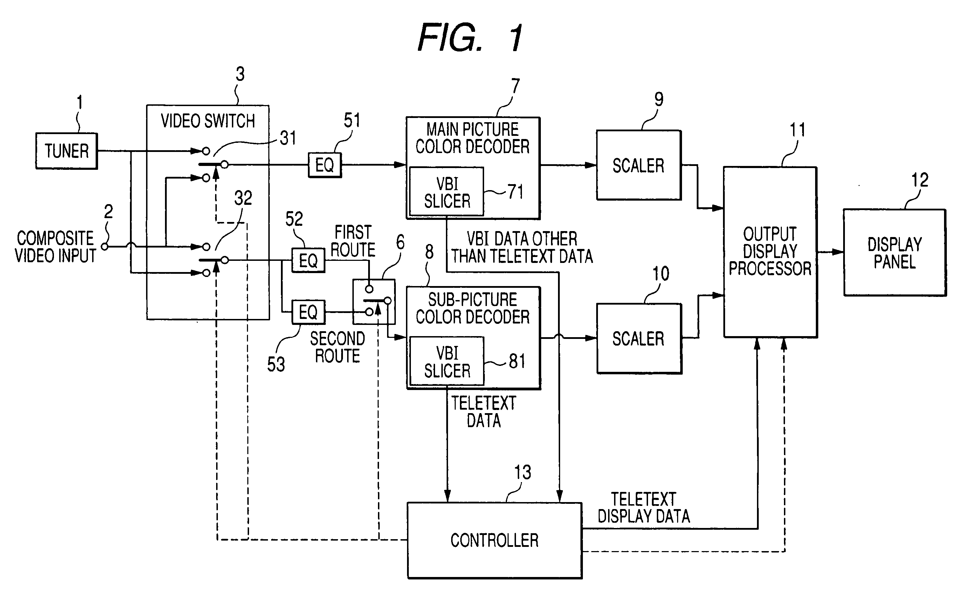

Embodiments according to the invention will be described hereinafter with reference to the accompanying drawings. Fig. 1 is a block diagram showing a configuration of a video display system according to a first embodiment of the invention.

As shown in Fig. 1, the video display apparatus according to the first embodiment is equipped with a tuner 1, an external input terminal 2 as a composite video signal input terminal, a video switch 3 as a first switch, a main picture color decoder 7 as a first color decoder, a sub-picture color decoder 8 as a second color decoder, scalers 9 and 10, an output display processor 11, a display panel 12, a first equalizer 51 (hereinafter referred to as "EQ 51") as a first correction unit, a second equalizer (hereinafter referred to as "EQ 52") as a second correction unit, a third equalizer (hereinafter referred to as "EQ 53") as a third correction unit, a signal route switch 6 as a second switch, and a controller 13. In Fig. 1, broken lines indicate flows of control signals and solid lines indicate flows of video signals or data.

The tuner 1 receives an analog or digital TV broadcast via an antenna and outputs a composite video signal to the video switch 3.

The external input terminal 2 is a terminal through which a video output signal, that is, a composite video signal, of a DVD player, a CATV tuner, or a ground-wave digital broadcast tuner is input.

The video switch 3 is equipped with switches 31 and 32 having four input terminals and two output terminals and can switch the routes of composite video signals according to control signals that are input from the controller 13.

The video switch 3 has a function to switch between two signal routes of: a "one-system-input / two-branch-output" for separately outputting two (split) composite video signals of the same input system to a main picture (first picture display) signal route and a sub-picture (second picture display) signal route; and a "two-system-input / two-system-output" for outputting two composite video signals of separate input systems to the main picture signal route and the sub-picture signal route.

For example, when the "two-system-input / two-system-output" is selected, a composite video signal input from the tuner 1 is output to the main picture signal route and a composite video signal input from the external input terminal 2 is output to the sub-picture signal route.

That is, the video switch 3 switches the processing route for at least one input composite video signal to enable two-picture display or one-picture display. The two-picture display is to simultaneous display a main picture and a sub-picture. The display form of each of the two pictures may be arbitrary form.

The main picture color decoder 7 includes a VBI slicer 71. VBI stands for "vertical blanking interval." The VBI slicer 71 extracts VBI data other than teletext data from a composite video signal and outputs those to the controller 13. Examples of VBI data other than teletext data are VPS (video programming system) data and WSS (wide screen signaling) data.

The main picture color decoder 7 color-demodulates a received composite video signal into a Y color difference signal, which is output to the scaler 9.

The main picture color decoder 7 not only demodulates a composite video signal and outputs a video signal for display of a main picture but also extracts VBI data other than teletext data from original VBI data and outputs the extracted VBI data to the controller 13. That is, a main picture display video signal and VBI data other than teletext data are output from the main picture color decoder 7.

The sub-picture color decoder 8 includes a VBI slicer 81. The VBI slicer 81 extracts teletext data from a composite video signal and outputs those to the controller 13. The sub-picture color decoder 8 color-demodulates a received composite video signal into a video signal such as a Y color difference signal, which is output to the scaler 10.

The sub-picture color decoder 8 not only demodulates a composite video signal and outputs a video signal for display of a sub-picture but also extracts teletext data from VBI data and outputs the extracted teletext data to the controller 13. That is, a sub-picture display video signal and teletext data are output from the color decoder 8.

The scalers 9 and 10 convert received video signals into desired picture sizes and formats and output resulting signals to the output display processor 11, respectively.

In two-picture display, the output display processor 11 combines video signals received from the respective scalers 9 and 10 and outputs a composed signal to the display panel 12.

In two-picture simultaneous display, a sub-picture route signal is input to the output display processor 11 via EQ 52 having the same correction characteristic as EQ 51, the sub-picture color decoder 8, and the scaler 10.

A teletext signal is superimposed on 16 lines, for example, of 5-22 lines of each VBI of a composite video signal.

In one-picture display, the teletext signal is converted into digital data by the VBI slicer 81 of the sub-picture color decoder 9 and decoded by the controller 13 into a teletext display signal, which is superimposed on a main picture video signal by the output display processor 11.

The teletext signal insertion lines are 16 lines and are in contention with lines in which other signals (e.g., a VPS signal) are inserted. Setting separate sets of insertion lines for main picture display and sub-picture display makes it possible to acquire respective data simultaneously.

The display panel 12, which is an LCD panel, for example, is capable of not only ordinary one-picture display but also two-picture display of a first picture and a second picture in the form of double windows (DW) or picture in picture (PIP) .

EQ 51 is connected between the video switch 3 and the main picture color decoder 7. EQ 51 corrects an input composite video signal into a composite video signal having characteristics in which priority is given to image quality (conversion of characteristics).

EQ 52 is connected between the video switch 3 and the sub-picture color decoder 8. EQ 52 has the same circuit configuration and the same circuit constants as EQ 51. That is, the signal correcting function of EQ 52 is equivalent to that of EQ 51. EQ 52 corrects an input composite video signal into a composite video signal having characteristics in which priority is given to image quality (conversion of characteristics).

EQ 53 is connected between the video switch 3 and the sub-picture color decoder 8. EQ 53 has the same circuit configuration as but different circuit constants than EQ 51. EQ 53 corrects an input composite video signal into a signal whose characteristics are most suitable for acquisition of teletext data. That is, EQ 53 converts an input composite video signal into a composite video signal having characteristics in which priority is given to teletext data acquisition.

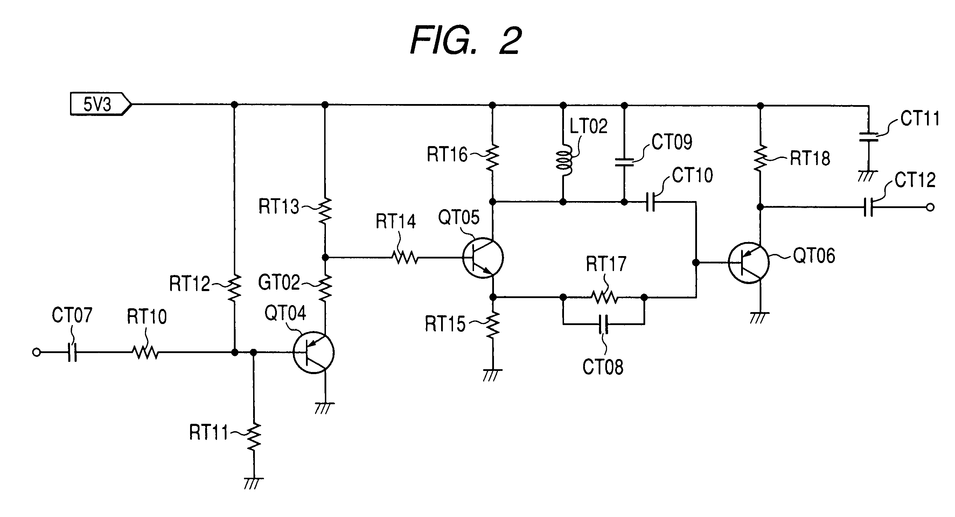

As shown in Fig. 2, the circuit of each of EQ 51, EQ52, and EQ53 is composed of discrete components including resistors RT10-RT18, capacitors CT07-CT12, transistors QT04-QT06, and an inductor LT02. Each of EQ 51, EQ52, and EQ53 corrects (adjusts) the group delay characteristic and the frequency characteristic of a composite video signal.

The route switch 6 is connected between the pair of equalizers 52 and 53 and the sub-picture color decoder 8. Controlled by a control signal, the route switch 6 switches the route for a composite video signal between a first route for inputting it to the sub-picture color decoder 8 via EQ52 and a second route for inputting it to the sub-picture color decoder 8 via EQ53.

When the picture display function is set to a two-picture display mode, that is, during two-picture display, the controller 13 controls the video switch 3 and the signal route switch 6 so that a composite video signal coming from the tuner 1 which is a composite video signal for first picture display is input to the main picture color decoder 7 via EQ 51 and that a composite video signal coming from the external input terminal 2 which is a composite video signal for second picture display is input to the sub-picture color decoder 8 via EQ 52 (i.e., along the first route).

When the picture display function is set to a one-picture display mode and a composite video signal coming from the tuner 1 is selected as an input signal, the controller 13 controls the video switch 3 and the signal route switch 6 so that the composite video signal coming from the tuner 1 which is a composite video signal for first picture display is input to the main picture color decoder 7 via EQ 51 and that the same (split) composite video signal coming from the tuner 1 is input to the sub-picture color decoder 8 via EQ 53 (i.e., along the second route).

The operation of this video display apparatus will be described below. In this video display apparatus, in the mode (hereinafter referred to as "one-picture display mode") in which one input signal (e.g., a composite video signal coming from the tuner 1) is demodulated and used for display of only a main picture, the composite video signal coming from the tuner 1 is split in the circuit and two identical signals are input to the video switch 3 separately.

In this case, by controlling the video switch 3, the controller 13 causes one split composite video signal to be output to EQ51 and the other split composite video signal to be output to EQ 53. If a composite video signal coming from the external input terminal 2 rather than a composite video signal coming from the tuner 1 is selected, the composite video signal coming from the external input terminal 2 is split in the circuit into two signals, which are input to the video switch 3 separately. One split signal is output to the main picture signal route from the video switch 3. The other split signal may be used for data acquisition; that is, it is not decoded into a video signal for picture display (one-picture display is thus performed).

In the one-picture display mode, when one split composite video signal is input to EQ 51 from the video switch 3, it is corrected by EQ 51 so as to have characteristics in which priority is given to image quality and the corrected signal is input to the main picture color decoder 7. The main picture color decoder 7 generates a video signal having best image quality on the basis of the received composite video signal and outputs it to the scaler 9.

The scaler 9 converts the received video signal into a desired picture size and format and outputs a resulting signal to the output display processor 11.

On the other hand, as for the other split composite video signal, the controller 13 controls the video switch 3 and the signal route switch 6 so that it is input to the sub-picture color decoder 8 along the second route. That is, the same composite video signal as for main picture display is input to EQ 53 from the video switch 3 and corrected by EQ 53 so as to have characteristics that are most suitable for teletext data acquisition. A resulting signal is input to the sub-picture color decoder 8.

As a result, in the sub-picture color decoder 8, the VBI slicer 81 can stably extract teletext data from the composite video signal whose characteristics are most suitable for teletext data acquisition.

The teletext data extracted by the VBI slicer 81 are input to the controller 13. The controller 13 generates teletext display data on the basis of the teletext data and outputs the generated data to the output display processor 11.

The output display processor 11 superimposes the teletext display data supplied from the controller 13 on the main display video signal supplied from the scaler 9 and outputs a resulting signal to the display panel 12. Video of one teletext-superimposed picture is thus displayed.

On the other hand, in the two-picture simultaneous display mode, the controller 13 causes a main picture signal and a sub-picture signal to be transmitted along separate routes and combined together by the output display processor 11. A resulting signal is output to the display panel 12.

For example, the route for a main picture signal is such a route that an output of the tuner 1 is input to the output display processor 11 via the main picture color decoder 7 and the scaler 9. The route for a sub-picture is such a route that an input signal coming from the external input terminal 2 is input to the output display processor 11 via the sub-picture color decoder 8 and the scaler 10.

As described above, in the two-picture simultaneous display mode in which a composite video signal that is output from the tuner 1 is displayed as a main picture and a composite video signal that is input through the'external input terminal 2 is displayed as a sub-picture, the controller 13 controls the video switch 3 and the signal route switch 6 so that the composite video signal that is input from the tuner 1 to the video switch 3 is output to EQ 51 which performs correction so that priority is given to image quality and a resulting signal is input to the main picture color decoder 7 from EQ 51.

The composite video signal that is input from the external input terminal 2 to the video switch 3 is output to EQ 52 having the same characteristics correcting function as EQ 51 and a corrected signal is input to the sub-picture color decoder 8 from EQ 52. As a result, video of each of a main picture and a sub-picture is displayed with best image quality.

That is, separate composite video signals are input to the respective decoders 7 and 8 after each of them is corrected so as to have characteristics in which priority is given to image quality, whereby video of each picture can be given superior image quality also in two-picture display.

As described above, in the video display apparatus according to the first embodiment, in two-picture display, a composite video signal coming from the tuner 1 is input to the main picture color decoder 7 via EQ 51 which performs correction so that priority is given to image quality and a composite video signal coming from the external input terminal 2 is input to the sub-picture color decoder 8 via EQ 52 which also performs correction so that priority is given to image quality. On the other hand, in one-picture display, one of two split main picture composite video signals is input to the sub-picture color decoder 8 via EQ 53 which performs correction so that priority is given to teletext data acquisition. As such, the first embodiment makes it possible to attain both of increase in image quality by use of the multi-picture display function and increase in teletext data decoding performance.

That is, in the apparatus which has the function of receiving plural composite video signals and can simultaneously display videos as two pictures, that is, a main picture and a sub-picture, when video is to be displayed as only a main picture, the sub-picture color decoder 8 which is provided on the signal route that is separate from the main picture signal route is used for acquisition of teletext data. And EQ 53 (third correction unit) which provides best conditions for acquisition of teletext data is provided on the above separate signal route. Therefore, optimum teletext acquisition performance can be attained while main-picture video is given best image quality.

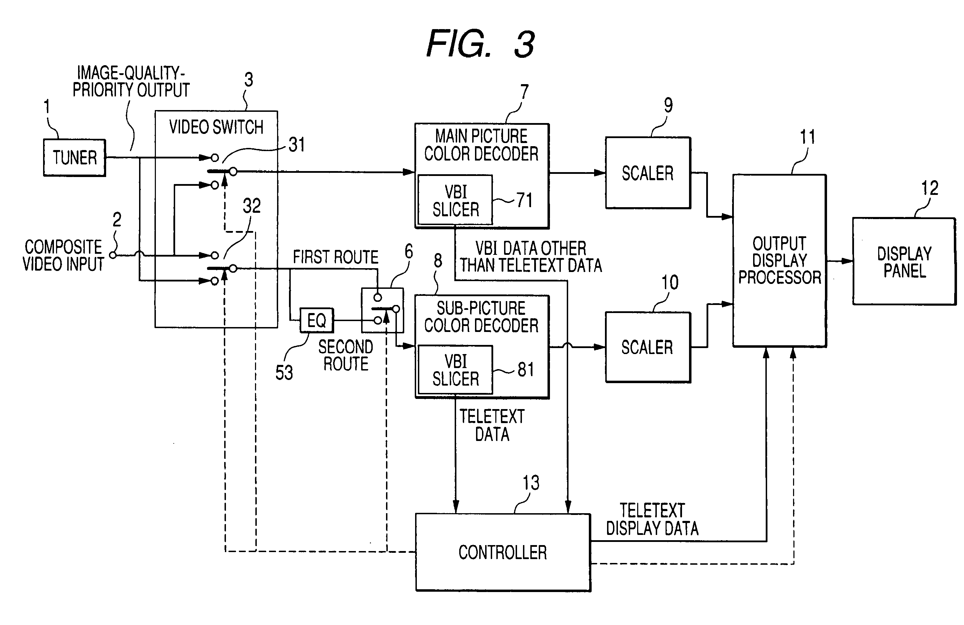

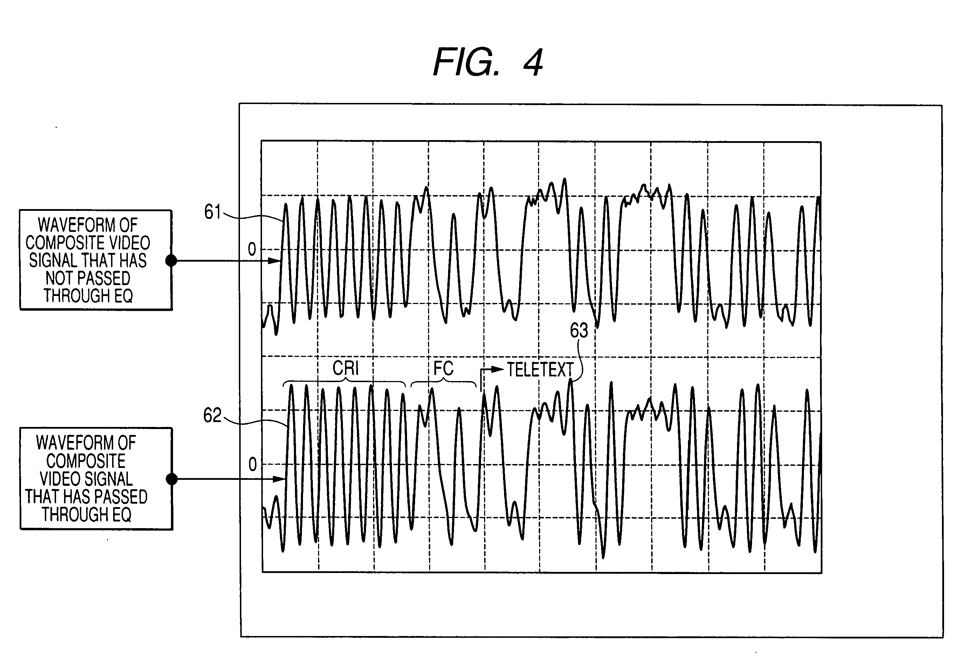

Next, a second embodiment will be described with reference to Figs. 3 and 4. In the second embodiment, the same components as in the first embodiment will be given the same symbols as in the first embodiment and will not be described.

As shown in Fig. 3, a video display apparatus according to the second embodiment is equipped with a tuner 1, an external input terminal 2, a video switch 3, a main picture color decoder 7, a sub-picture color decoder 8, scalers 9 and 10, an output display processor 11, a display panel 12, EQ 53, a signal route switch 6, and a controller 13.

The signal route switch 6 is connected between the video switch 3 and the sub-picture color decoder 8. The signal route switch 6 switches between a first route (bypass route) for inputting a composite video signal that is output from the video switch 3 directly to the sub-picture color decoder 8 without passage through EQ 53 and a second route (signal correction route) for inputting it to the sub-picture color decoder 8 via EQ 53.

That is, in the video display apparatus according to the second embodiment, the tuner 1, for example, generates, in advance, a composite video signal having characteristics in which priority is given to image quality and outputs it to the downstream signal processing route(s), whereby EQ 51 and EQ 52 used in the first embodiment which have the same characteristics are omitted.

In the second embodiment, in the two-picture display mode in which a first picture and a second picture are displayed simultaneously, the controller 13 controls the video switch 3 and the signal route switch 6 so that a composite video signal coming from the tuner 1 which is a composite video signal for first picture display is input directly to the main picture color decoder 7 and that a composite video signal coming from the external input terminal 2 is input to the sub-picture color decoder 8 along the first route (bypass route).

As a result, in two-picture display, a composite video signal that is output from the tuner 1 as having characteristics in which priority is given to image quality is input to the main picture color decoder 7 and a composite video signal that is output from the external input terminal 2 as having characteristics in which priority is given to image quality is input to the sub-picture color decoder 8. The two composite video signals are decoded by the decoders 7 and 8 and input via the scalers 9 and 10 to the output display processor 11, which combines them together and outputs a resulting signal.

In the one-picture display mode, the controller 13 controls the video switch 3 and the signal route switch 6 so that one split composite video signal originating from the tuner 1 is input directly to the main picture color decoder 7 and that the other split composite video signal originating from the tuner 1 or a composite video signal that is input from another source (i.e., an input signal from the external input terminal 2) is input to the sub-picture color decoder 8 via EQ 53 which performs correction so that priority is given to data acquisition.

As a result, in one-picture display, one of two split main picture composite video signals having characteristics in which priority is given to image quality is input directly to the main picture color decoder 7, decoded there, and input to the output display processor 11 via the scaler 9. The other split composite video signal is input to the sub-picture color decoder 8 via EQ 53 which performs correction so that priority is given to teletext data acquisition. In EQ 53, teletext data are extracted from VBI data by the VBI slicer 81. The teletext data are input to the output display processor 11 via the controller 13.

The output display processor 11 constructs a single picture by superimposing the teletext data on main picture video. The single picture is output to the display panel 12 and displayed there.

1 Fig. 4 shows a comparison of a waveform 61 of a composite video signal that has not passed through EQ 53 with a waveform 62 of a composite video signal that has passed through EQ 53. The waveform 62 of the composite video signal that has passed through EQ 53 has greater wave heights than the waveform 61 of the composite video signal that has not passed through EQ 53. That is, the former signal has a wider dynamic range and hence is more suitable for data acquisition.

More specifically, in the waveform 62 of the composite video signal, teletext data follows clock run-in (CRI) and a frame code (FC). The signal boundary can be made clear by, for example, amplifying an overshoot portion 63 to a proper extent, which facilitates data acquisition when the VBI slicer 81 performs slicing.

On the other hand, if the composite video signal having the waveform 62 is decoded as a video signal, video edges are emphasized too much and hence a resulting video signal is not suitable for viewing.

In the video display apparatus according to second embodiment, a composite video signal having characteristics in which priority is given to image quality is generated in advance in a signal input source(s) (e.g., tuner 1) and then output to the individual route(s). Therefore, EQ 51 and EQ 52 having the same characteristic which are used in the first embodiment can be omitted and a simple configuration can thereby be attained.

The present invention is not limited to the above embodiments. In the practicing stage, the components may be modified without departing from the spirit and scope of the invention. And various inventions can be made by combining, as appropriate, plural components disclosed in the embodiments.

For example, components of different embodiments can be combined as appropriate or several ones of the components of each embodiment can be removed.

Although the above embodiments are directed to the cases of one-picture display and two-picture display, multi-picture display of three, four, or more pictures may be implemented in the case where the numbers of external input terminals 2 and switches of the video switch 3 are large.

## Claims

1. A video display apparatus comprising:
a first switch that switches a processing route for a composite video signal to perform a two-picture display or a one-picture display;
a first color decoder that decodes the composite video signal to output a video signal for displaying a first picture, while extracting data other than teletext data from data included in vertical blanking intervals of the composite video signal;
a second color decoder that decodes the composite video signal to output a video signal for displaying of a second picture, while extracting the teletext data from the data included in vertical blanking intervals of the composite video signal;
a first correction unit that is connected between the first switch and the first color decoder and corrects the composite video signal to have characteristics prioritized for improving image quality;
a second correction unit that is connected between the first switch and the second color decoder and corrects the composite video signal to have characteristics prioritized for improving image quality;
a third correction unit that is connected between the first switch and the second color decoder and corrects the composite video signal to have characteristics prioritized for data acquisition;
a second switch that is connected between the first switch and the second color decoder and switches between a first route for outputting the composite video signal to the second color decoder via the second correction unit and a second route for outputting the composite video signal to the second color decoder via the third correction unit; and
a controller that controls the first switch and the second switch:
(1) when performing the two-picture display, to output the composite video signal for displaying the first picture to the first color decoder via the first correction unit, and to output the composite video signal for displaying the second picture to the second color decoder along the first route; and
(2) when performing the one-picture display, to output the composite video signal for displaying the first picture to the first color decoder via the first correction unit, and to output the composite video signal for displaying the first picture or other input composite video signal to the second color decoder along the second route.

2. The video display apparatus according to claim 1 further comprising a display that displays the first picture and the second picture.

3. The video display apparatus according to claim 1, wherein the first color decoder comprises a first vertical blanking interval slicer that extracts VBI data other than the teletext data from the composite video signal.

4. The video display apparatus according to claim 1, wherein the second color decoder comprises a second vertical blanking interval slicer that extracts the teletext data from the composite video signal.

5. The video display apparatus according to claim 1 further comprising a first scaler that converts the video signal output from the first color decoder.

6. The video display apparatus according to claim 1 further comprising a second scaler that converts the video signal output from the second color decoder.

7. The video display apparatus according to claim 1 further comprising a display processor that combines video signals output from the first color decoder and the second color decoder.

8. A video display apparatus comprising:
a first switch that switches a processing route for a composite video signal to perform a two-picture display or a one-picture display;
a first color decoder that decodes the composite video signal to output a video signal for displaying a first picture, while extracting data other than teletext data from data included in vertical blanking intervals of the composite video signal;
a second color decoder that decodes the composite video signal to output a video signal for displaying of a second picture, while extracting the teletext data from the data included in vertical blanking intervals of the composite video signal;
a correction unit that is connected between the first switch and the second color decoder and corrects the composite video signal to have characteristics prioritized for data acquisition;
a second switch that is connected between the first switch and the second color decoder and switches between a first route for outputting the composite video signal to the second color decoder not via the correction unit and a second route for outputting the composite video signal to the second color decoder via the correction unit; and
a controller that controls the first switch and the second switch:
(1) when performing the two-picture display, to output the composite video signal for displaying the first picture directly to the first color decoder, and to output the composite video signal for displaying the second picture to the second color decoder along the first route; and
(2) when performing the one-picture display, to output the composite video signal for displaying the first picture directly to the first color decoder, and to output the composite video signal for displaying the first picture or other input composite video signal to the second color decoder along the second route.

9. The video display apparatus according to claim 8 further comprising a display that displays the first picture and the second picture.

10. The video display apparatus according to claim 8, wherein the first color decoder comprises a first vertical blanking interval slicer that extracts VBI data other than the teletext data from the composite video signal.

11. The video display apparatus according to claim 8, wherein the second color decoder comprises a second vertical blanking interval slicer that extracts the teletext data from the composite video signal.

12. The video display apparatus according to claim 8 further comprising a first scaler that converts the video signal output from the first color decoder.

13. The video display apparatus according to claim 8 further comprising a second scaler that converts the video signal output from the second color decoder.

14. The video display apparatus according to claim 8 further comprising a display processor that combines video signals output from the first color decoder and the second color decoder.

15. A method for displaying video by a video display apparatus having:
a first color decoder that decodes a composite video signal to output a video signal for displaying a first picture, while extracting data other than teletext data from data included in vertical blanking intervals of the composite video signal;
a second color decoder that decodes the composite video signal to output a video signal for displaying of a second picture, while extracting the teletext data from the data included in vertical blanking intervals of the composite video signal; and
a controller that switches signal routes of the composite video signal to be output to the first color decoder and the second color decoder,
wherein the method comprising:
when performing a two-picture display for displaying a first picture and a second picture simultaneously on one screen, outputting the composite video signal for displaying the first picture directly to the first color decoder, while outputting the composite video signal for displaying the second picture to the second color decoder along the first route; and
when performing a one-picture display for displaying only the first picture, outputting the composite video signal for displaying the first picture directly to the first color decoder, and outputting the composite video signal for displaying the first picture or other input composite video signal to the second color decoder via a correction unit that corrects the composite video signal to have characteristics prioritized for data acquisition.
